# EUROPÄISCHE PATENTANMELDUNG

(11) **EP 4 729 154 A1**
(43) Veröffentlichungstag der Anmeldung: **22.04.2026**
(21) Anmeldenummer: 25203341.0
(22) Anmeldetag: 19.09.2025
(51) Int. Cl.: B01D 53/62, B01D 53/34

(54) **VERFAHREN ZUR KOHLENDIOXIDABSCHEIDUNG FÜR EINE MÜLLVERBRENNUNGSANLAGE**

(30) Priorität: 16.10.2024 DE 102024130087
(71) Anmelder: Technische Universität Darmstadt, 64289 Darmstadt (DE)
(72) Erfinder: GRECO COPPI, Martin Nicolas, 64287 Darmstadt (DE); STRÖHLE, Jochen, 64380 Rossdorf (DE); EPPLE, Bernd, 64395 Brensbach (DE)
(74) Vertreter: LifeTech IP Spies & Behrndt Patentanwälte PartG mbB

(57) **Zusammenfassung**

Ein Verfahren zur Kohlendioxidabscheidung für eine Müllverbrennungsanlage (120) umfasst ein Bereitstellen (S110) von Abfällen und ein Trennen (S120) der Abfälle in einen ersten Teil (101) und einen zweiten Teil (102). Weiter umfasst das Verfahren ein Verbrennen (130) des ersten Teils (101) in einer Müllverbrennungseinrichtung (120) der Müllverbrennungsanlage und Abscheiden eines dabei erzeugten Rauchgases (103), das Kohlendioxid aufweist. Weiter umfasst das Verfahren ein Karbonatisieren (S140) eines Sorptionsmittels basierend auf dem Rauchgas (103). Weiter umfasst das Verfahren ein Verfeuern (S150) des zweiten Teils (102) und darauf basierend Kalzinieren des karbonatisierten Sorptionsmittels, um Kohlendioxidgas (105) abzuscheiden.

## Beschreibung

Die vorliegende Erfindung bezieht sich auf ein Verfahren zur Kohlendioxidabscheidung für eine Müllverbrennungsanlage, eine Müllverbrennungsanlage mit integrierter Kohlendioxidabscheidung, ein Verfahren zum Nachrüsten einer Müllverbrennungsanlage, und insbesondere auf ein integriertes Karbonatkreislaufverfahren zur effizienten CO₂-Abscheidung in Müllverbrennungsanlagen.

### HINTERGRUND

Müllheizkraftwerke, MHKWs, spielen weltweit eine Schlüsselrolle in der Abfallwirtschaft. Sie bieten nicht nur eine Lösung für das Problem der Abfallerzeugung, sondern liefern auch Strom sowie Wärme für Fernwärme und industrielle Prozesse. In MHKWs wird der im Abfall enthaltene Kohlenstoff durch Verbrennung fast vollständig in CO₂ umgewandelt. Bei herkömmlichen Verbrennungsverfahren führt dies im Durchschnitt zu einer Tonne CO₂ pro Tonne Abfall.

Um die CO₂ -Emissionen in MHKWs zu verringern, können CO₂-Abscheidungs-technologien eingesetzt werden. Generell kann bei der Verbrennung allgemeiner kohlenstoffhaltiger Brennstoffe zwischen Abscheideverfahren unterschieden werden, bei denen CO₂ vor, während oder nach der Verbrennung abgeschieden wird. Die meisten Abscheidungsverfahren sind jedoch mit hohen wirtschaftlichen Nachteilen verbunden, die vom Abscheidungsprinzip, dem Integrationskonzept und den standortspezifischen Beschränkungen der Anlagen zu Verbrennung und Abscheidung abhängen. Herkömmliche Verfahren zur CO₂-Abscheidung haben beispielsweise häufig einen hohen Energieverbrauch, der zu einem geringeren Wirkungsgrad der Anlage und höheren Kosten führt.

So sind sogenannte "Pre-Combustion Capture"-Verfahren, also Verfahren, die CO₂ vor der Verbrennung abscheiden, zwar im Prinzip für Müllverbrennung geeignet, lassen sich aber nicht gut umrüsten bzw. in MHKWs einsetzen. Die Oxyfuel-Verbrennung, also eine Verbrennung mit reinem Sauerstoff anstatt Luft, kann eine CO₂ -Abscheidung dadurch ermöglichen, dass das entstehende Rauchgas durch den fehlenden Luftstickstoff im Wesentlichen Kohlendioxid und Wasserdampf enthält. Dieses Verfahren erfordert jedoch viel Energie, um den reinen Sauerstoff zu erzeugen. Lösemittelbasierte Technologien sind verhältnismäßig weit entwickelt, erfordern jedoch große Wärmemengen für die Regeneration des Sorptionsmittels (etwa 3,5 GJ pro Tonne CO₂), und die entsprechenden Anlagen weisen einen hohen Flächenbedarf auf.

Unter den Verfahren der Abscheidung nach der Verbrennung hat das Karbonatkreislaufverfahren (Carbonate-Looping, CaL) das Potential, den Effizienzverlust im Vergleich zu lösungsmittelbasierten Technologien erheblich zu verringern. Das CaL umfasst ein Binden von CO₂ aus Ab- bzw. Rauchgasen der Verbrennung mit Hilfe eines Sorptionsmittels, beispielsweise gebranntem Kalk, CaO. Das Produkt (beispielsweise Kalziumkarbonat, CaCO₃) wird anschließend in einem separaten Kalzinierer unter Wärmeeinwirkung wieder in das Sorptionsmittel und gasförmiges CO₂ aufgespalten. Das dabei produzierte CO₂ kann eingefangen werden. Das gewonnene Sorptionsmittel wird erneut zum Binden von CO₂ aus den Rauchgasen verwendet. Solche CaL-Verfahren sind als nachgelagerte Prozesse zur Abscheidung von CO₂ in Industrieanlagen vorgeschlagen worden.

Insbesondere offenbart die Schrift EP 2 174 699 B1 ein CaL-Verfahren zur Abscheidung von CO₂ aus Verbrennungsabgas, das durch die Verbrennung von Abfällen oder anderen kohlenstoffhaltigen Brennstoffen unter Zuhilfenahme von Luft als Oxidationsmittel in einer Brennkammer entsteht. In dem dort vorgestellten Verfahren umfasst der Kalzinierer ein Wirbelschichtbett, in dem zur Bereitstellung der Wärmeeinwirkung Kohle in einem Oxyfuel-Prozess verfeuert wird.

Diese Verfeuerung im Kalzinierer verlangt einen erheblichen Energieaufwand, der sich in der Gesamtenergiebilanz bei solchen CaL-Abscheideverfahren negativ auswirkt. Zur Verbesserung der Effizienz ist bekannt, Wärme aus anderen Teilprozessen des Verfahrens einzusetzen. Insbesondere offenbart die Schrift EP 2 174 699 B1, als Fremdwärmequellen die am Kalzinierer austretenden Sorptionsmittel- und Gasmassenströme zu verwenden. Die Schrift WO 2020/225689 A1 offenbart, anstelle von Kohle saures Gas zur Verfeuerung einzusetzen. Die Schrift EP 2 299 176 B1 offenbart, den Verfeuerungsprozess stofflich von dem Aufspaltungsprozess des CO₂-beladenen Sorptionsmittels abzutrennen und dafür eine Verfeuerung von Kohle basierend auf Luft anstelle des in seiner Herstellung energieintensiven Sauerstoffs durchzuführen.

Es ist bekannt, dass andere Festbrennstoffe als Kohle zur Verfeuerung im Kalzinierer verwendet werden können. Insbesondere kann fester Ersatzbrennstoff, sogenannter "solid recovered fuel", SRF, auch basierend auf Abfällen hergestellt werden (vgl. Haaf M., Anantharaman R., Roussanaly S., Ströhle J., Epple B.: "CO2 Capture from Waste-to-Energy Plants: Techno-Economic Assessment of Novel Integration Concepts of Calcium Looping Technology". In: "Resources, Conservation and Recycling", 162, 104973, Elsevier B.V. 2020). SRF wird eigens aus Gewerbeabfällen wie Papier, Pappe, Holz, Textilien und Kunststoff hergestellt und zusätzlich verarbeitet, um die Qualität und den Brennwert zu verbessern.

Der Prozess des Kalzinierens bleibt insgesamt energieintensiv und stellt weiterhin einen Nachteil für das CaL-Verfahren in realen CO₂-Abscheideprozessen dar.

Daher besteht allgemein ein Bedarf an verbesserten, insbesondere energie- und kosteneffizienteren Methoden der Abscheidung von CO₂ in Industrieprozessen, und insbesondere an Verbesserungen des CaL-Prozesses.

### KURZBESCHREIBUNG DER ERFINDUNG

Ein Beitrag dazu wird durch ein Verfahren zur Kohlendioxidabscheidung für eine Müllverbrennungsanlage nach Anspruch 1, eine Müllverbrennungsanlage nach Anspruch 10 und ein Verfahren zum Nachrüsten einer Müllverbrennungsanlage nach Anspruch 11 erreicht. Die abhängigen Ansprüche beziehen sich auf vorteilhafte Weiterbildungen der Gegenstände der unabhängigen Ansprüche.

Die vorliegende Erfindung bezieht sich auf ein Verfahren zur Kohlendioxidabscheidung für eine Müllverbrennungsanlage. Das Verfahren umfasst ein Bereitstellen von Abfällen, ein Trennen der Abfälle in einen ersten Teil und einen zweiten Teil, ein Verbrennen des ersten Teils in einer Müllverbrennungseinrichtung der Müllverbrennungsanlage und Abscheiden eines dabei erzeugten Rauchgases, das Kohlendioxid aufweist, ein Karbonatisieren eines Sorptionsmittels basierend auf dem Rauchgas, und ein Verfeuern des zweiten Teils und darauf basierend Kalzinieren des karbonatisierten Sorptionsmittels, um Kohlendioxidgas abzuscheiden.

Hier und im Folgenden wird unter einer Müllverbrennungsanlage (englisch "incineration facility") eine Anlage verstanden, die eine oder mehrere Müllverbrennungseinrichtungen umfasst. Die Müllverbrennungseinrichtung ist unmittelbar zum Verbrennen von Abfällen ausgebildet und kann dazu eine oder mehrere Müllverbrennungslinien umfassen. Die Müllverbrennungsanlage kann weitere Einrichtungen umfassen, die ausgebildet sind, die Abfälle zu empfangen, zu lagern und/oder für das Verbrennen vor- bzw. aufzubereiten. Insbesondere kann die Müllverbrennungsanlage dazu einen oder mehrere Müllverbrennungsbunker für die Müllverbrennungseinrichtung aufweisen. Die Müllverbrennungsanlage kann insbesondere eine großtechnische Anlage sein. Die Müllverbrennungsanlage kann als Müllheizkraftwerk (englisch "waste-to-energy facility") ausgebildet sein, um bei dem Verbrennen freiwerdende Energie zu einer Stromerzeugung zu nutzen oder als Fernwärme bereitzustellen.

In vorteilhaften Ausführungsbeispielen umfassen die Abfälle Siedlungsabfälle. Unter dem Begriff Siedlungsabfälle können dabei Abfälle verstanden werden, die von oder für Gemeinden gesammelt und behandelt werden. Siedlungsabfälle umfassen insbesondere Abfälle aus Haushalten einschließlich Sperrmüll, ähnlicher Abfälle aus Gewerbebetrieben oder Bürogebäuden, sowie Hof- und Gartenabfälle, Straßenkehricht und den Inhalt von Müllcontainern und Marktreinigungsabfälle, sofern sie als Hausmüll behandelt werden. Nicht unter den Begriff der Siedlungsabfälle fallen hingegen beispielsweise Abfälle aus kommunalen Abwassernetzen und aus deren Aufbereitungsanlagen sowie Abfälle aus Bau- oder Gebäudeabbrucharbeiten.

Das Bereitstellen der Abfälle kann insbesondere ein Sammeln der Abfälle in einem Bunker umfassen. Es kann darüber hinaus auch ein Einsammeln der Abfälle mit Hilfe von Nutzfahrzeugen, insbesondere Mülllastkraftwagen, umfassen.

Das Trennen der Abfälle erfolgt vorteilhafterweise in einem Bunker. Für das Trennen können gewöhnliche Trennverfahren der Müllentsorgung eingesetzt werden. Das Trennen kann insbesondere ein Sortieren umfassen. Das Trennen kann im Rahmen der Aufbereitung der Abfälle für die Müllverbrennungseinrichtung erfolgen. Bei dem Trennen nach dem hier vorgestellten Verfahren können allerdings im Unterschied zu üblichen Trenn- bzw. Aufbereitungsverfahren der Müllentsorgung insbesondere hochkalorische Anteile der Abfälle, wie z.B. Papier, Holz, Öl, Fett und Kunststoffe, in den zweiten Teil sortiert werden. Auf diese Weise kann ein Brennwert des zweiten Teils für das Verfeuern im Kalzinierer bzw. der Kalziniereinrichtung erhöht werden.

Durch das Verbrennen des ersten Teils des Abfalls bilden kohlenstoffhaltige chemische Verbindungen, insbesondere Kohlendioxid, einen Teil des Rauchgases. Das Abscheiden des Rauchgases kann ein einfaches Ableiten aus einer Verbrennungszone oder der Müllverbrennungseinrichtung sein.

Für das Karbonatisieren wird das Sorptionsmittel in Ausführungsbeispielen in einem Reaktor, der insbesondere ein zirkulierender Wirbelschichtreaktor sein kann, mit dem Rauchgas zusammengeführt. Insbesondere das Kohlendioxid im Rauchgas, aber auch andere kohlenstoffhaltige Verbindungen, und das Sorptionsmittel können chemisch reagieren, um Kohlenstoff oder Kohlendioxid an das Sorptionsmittel zu binden und das Sorptionsmittel so zu karbonatisieren. Das Sorptionsmittel kann beispielsweise Calciumkarbonat, CaCO₃, oder Magnesiumkarbonat, MgCO₃, sein oder umfassen. Das karbonatisierte Sorptionsmittel kann dann in eine Kalzinierungseinrichtung verbracht werden. Vorteilhafterweise enthält das Rauchgas nach dem Karbonatisieren einen deutlich geringeren Anteil an Kohlendioxid oder sonstigen Kohlenstoffverbindungen als vor dem Karbonatisieren.

Das Karbonatisieren erfolgt dabei vorteilhafterweise basierend auf Rauchgas aus der Müllverbrennung, also insbesondere nicht während oder zusammen mit dem Verbrennen des ersten Teils der Abfälle in der Müllverbrennungseinrichtung der Müllverbrennungsanlage. Das Karbonatisieren erfolgt dann getrennt von dem Verbrennen. Für das Karbonatisieren kann somit eine andere Einrichtung als die Müllverbrennungseinrichtung, etwa ein Wirbelschichtreaktor, verwendet werden. Dies kann den Vorteil bieten, dass sowohl das Verbrennen als auch das Karbonatisieren wesentlich versatiler und effizienter erfolgen können. Insbesondere braucht der erste Teil der Abfälle keine weiteren Anforderungen als die zu einer herkömmlichen Müllverbrennung zu erfüllen, und das Karbonatisieren kann in der anderen Einrichtung effizient erfolgen. Abfälle des ersten Teils müssen also z.B. nicht so zerkleinert und präpariert werden, dass sie in einem Wirbelschichtreaktor verwendet werden können.

Unter dem Begriff Kalzinieren kann eine chemische Reaktion verstanden werden, die aus dem karbonatisierten Sorptionsmittel Kohlendioxid und das kalzinierte Sorptionsmittel produziert. Durch das Kalzinieren kann das Kohlendioxid als Gas in hoher Reinheit produziert werden. Das Kohlendioxidgas kann abgeschieden und anderweitig verwendet werden. Insbesondere kann vorgesehen sein, das Kohlendioxidgas in eine geeignete CO₂-Senke einzulagern.

Das Verfahren basiert insbesondere auf der Erkenntnis, dass das Verfeuern des zweiten Teils der Abfälle in der Tat genügend Energie liefern kann, um das karbonatisierte Sorptionsmittel zu kalzinieren. Siedlungsabfälle können ein Potential zur Wärmebildung ähnlich wie Braunkohle aufweisen, und es hat sich herausgestellt, dass die aus dem Abfall gewinnbare Wärmemenge für das Kalzinieren insbesondere in wie im Folgenden beschriebenen Formen ausreicht. Während im Stand der Technik insbesondere fester Ersatzbrennstoff (solid recovered fuel, SRF) eingesetzt werden konnte, der einen höheren Brennwert liefert, aber aus besonderen Abfällen (Papier, Karton, Holz, Textilien, Kunststoff) verhältnismäßig aufwendig gewonnen werden muss, sieht das vorgestellte Verfahren vor, den Brennstoff unmittelbar dem zu verfeuernden Abfall zu entnehmen. Insbesondere kann so Siedlungsabfall verwendet werden. Der nach dem vorgestellten Verfahren verwendete zweite Teil der Abfälle hat nicht oder nicht notwendigerweise dieselbe Qualität wie SRF oder andere in der Industrie verwendete Brennmittel aus Abfällen. Es hat sich herausgestellt, dass zumindest bei Wirbelschichtreaktoren ein mechanisches Aufbereiten des zweiten Teils der Abfälle ausreichen kann. Insbesondere muss der zweite Teil der Abfälle nicht oder nicht notwendigerweise über eine einheitliche Teilchengröße sowie den Anteil hochkalorischer Abfälle wie SRF verfügen. Insgesamt erlaubt dies die Integration des Kohlendioxidabscheideverfahrens in das Verfahren zur Müllverbrennung. Mit anderen Worten hat sich ein rein mechanisches Aufbereiten der Abfälle als ausreichend herausgestellt, um in einem Kalzinierer bzw. einer Kalziniereinrichtung verfeuert zu werden, so dass das Verfahren insgesamt in unmittelbarem Zusammenhang mit der Müllverbrennung durchgeführt werden kann. Ausführungsbeispiele sehen ein Durchführen des Verfahrens mit allen Schritten in einer Müllverbrennungsanlage und insbesondere in einem Müllheizkraftwerk vor.

In vorteilhaften Ausführungsbeispielen umfasst das Verfahren daher das Verfeuern des ausschließlich mechanisch aufbereiteten (insbesondere rein mechanisch zerkleinerten) zweiten Teils der Abfälle, und darauf basierend Kalzinieren des karbonatisierten Sorptionsmittels, um Kohlendioxidgas abzuscheiden.

Das Verfeuern kann dabei auf einem weiteren Stoff, insbesondere etwa Luft, basieren. Vorteilhafterweise benötigt das Verfeuern aber keinen weiteren Festbrennstoff, insbesondere keine Kohle, und kein saures Gas. In weiteren vorteilhaften Ausführungsbeispielen kann das Verfeuern mit reinem Sauerstoff (O₂) erfolgen.

Das Karbonatisieren und das Verfeuern können in geeigneten Reaktor- bzw. Ofenanlagen durchgeführt werden. Dies können beispielsweise Wirbelschichtreaktoren, Drehreaktoren bzw. Drehrohrkalzinierer oder Rostreaktoren bzw. Rostkalzinierer sein. Letztere verfügen über einen kettenartigen, hochtemperaturbeständigen Vorschubrost zur Beförderung des Sorptionsmittels und ggf. des zweiten Abfallanteils.

Optional umfassen die Abfälle Haushaltsabfälle. Haushaltsabfälle sind bestimmte Siedlungsabfälle, die überwiegend in privaten Haushalten und vergleichbaren Einrichtungen anfallen, wie z. B. Hausmüll (Restmüll), Sperrmüll, Verpackungen und Gartenabfälle. Zu den Haushaltsabfällen zählen auch beispielsweise Batterien und Farben. Haushaltsabfälle können ein Abfallgemisch aus privaten Haushalten sein, wobei das Abfallgemisch meist in Mülltonnen oder -säcken gefüllt und von einer öffentlich oder privat organisierten Müllabfuhr abgefahren wird.

Optional umfasst das Verfahren ein Aufbereiten des zweiten Teils der Abfälle, wobei das Aufbereiten ein Schreddern umfasst. Unter dem Begriff Schreddern kann dabei ein mechanisches Zerkleinern durch Schneiden verstanden werden. In vorteilhaften Ausführungsbeispielen werden Haushaltsabfälle oder eine bestimmte Klasse von Haushaltsabfällen durch das Schreddern so zerkleinert, dass maximale Durchmesser für alle einzelnen Teile der Haushaltsabfälle bzw. der Klasse nicht größer sind als 10 cm. Für das Schreddern des zweiten Teils der Abfälle kann insbesondere eine Granuliereinrichtung geeignet sein, die maximale Ausdehnungen der Teilchen auf unter 5 oder gar 1 cm beschränkt.

Alternativ oder zusätzlich umfasst das Aufbereiten ein Ausscheiden metallischer Anteile aus dem zweiten Teil des Abfalls, basierend auf einer magnetischen und/oder einer induktiven Ausscheideeinrichtung. Dies kann vorteilhaft sein, da metallische Anteile in der Verfeuerung die Kalziniereinrichtung beschädigen können und zudem als Asche in der Kalziniereinrichtung verbleiben, die den Aufwand zur Wartung der Kalziniereinrichtung erhöht und oft nur in Deponien entsorgt werden kann. Zudem kann es wirtschaftlicher sein, Metalle zu rezyklieren bzw. einer anderweitigen Verwendung zuzuführen.

Alternativ oder zusätzlich umfasst das Aufbereiten ein Klassifizieren von Abfällen. Dies kann insbesondere auch noch vor dem Trennen der Abfälle in den ersten und den zweiten Teil erfolgen. Durch das Klassifizieren vor dem Trennen kann der Art der Kalziniereinrichtung Rechnung getragen werden. Beispielsweise können für einen Wirbelschichtreaktor kleinere Teile für den zweiten Teil bestimmt werden. Zudem können Abfälle mit höherem Brennwert für den zweiten Teil gewählt werden. Einen höheren Brennwert kann z.B. Holz gegenüber anderem organischem Material aufweisen. Abfälle können insbesondere nach einem Feuchtigkeitsgrad klassifiziert werden. Allgemein sind trockenere Abfälle für das Verfeuern von Vorteil. Ein Klassifizieren nach Feuchtigkeit kann aber auch innerhalb des zweiten Teils selbst durchgeführt werden, da in bestimmten Betriebsphasen der Kalziniereinrichtung (insbesondere in einer Anfeuerphase) trockenere Abfälle von Vorteil sind und die Anteile des zweiten Teils dann entsprechend eingesetzt werden können.

Dabei kann es ausreichen, lediglich grob nach einem höheren Anteil der Abfälle zu klassifizieren. Insbesondere in Ausführungsbeispielen, in denen ein Klassifizieren noch vor dem Trennen erfolgt, und in denen die Abfälle in einzelnen Einheiten (beispielsweise Lastwagenladungen oder Müllbehältern) bereitgestellt werden, kann es ausreichen, die Einheiten jeweils insgesamt nach einem überwiegenden Anteil einer Klasse von Abfällen entweder dem ersten oder dem zweiten Teil zuzuordnen.

Alternativ oder zusätzlich umfasst das Aufbereiten ein Brechen (englisch: "crushing"), also ein Zerkleinern durch Druckeinwirkung. Im Gegensatz zum Schreddern, in dem ungleichmäßig geformte Teile entstehen können, können durch das Brechen Teile in gleichmäßigerer Form hergestellt werden. Zudem kann das Brechen für härtere Abfälle wie z.B. Steine, Erze und Metalle eingesetzt werden, während das Schreddern vorteilhaft bei weicheren und leichteren Materialien wie z.B. Kunststoffen, Holz und Papier eingesetzt wird.

Die hier vorgestellten Schritte des Aufbereitens, insbesondere des Schredderns und/oder des Brechens, können mehrfach und auch in geeigneter bzw. auf die Abfälle angepasster Reihenfolge eingesetzt werden.

Das Aufbereiten benötigt nicht notwendigerweise ein Aussondern von schwereren Abfallkomponenten, wie dies bei der Herstellung von SRF oder anderen Ersatzbrennstoffen üblich ist. Auch ein Homogenisieren ist nicht in gleicher Qualität notwendig wie bei SRF. Ein Pressen bzw. Komprimieren zur Form von Pellets kann ebenfalls entfallen.

In manchen Ausführungsbeispielen kann das Aufbereiten auch ein Trocknen des zweiten und ggf. auch des ersten Teils der Abfälle umfassen. Das Trocknen kann einen Brennwert des zweiten Teils für das Verfeuern im Kalzinierer bzw. der Kalziniereinrichtung erhöhen. Das Trocknen kann beispielsweise ein Erwärmen in einem Drehrohrofen oder in einem entsprechend ausgebildeten Bunker selbst umfassen. Es hat sich jedoch herausgestellt, dass für das Verfeuern, bzw. für ein Betreiben des Kalzinierers bzw. der Kalziniereinrichtung, insbesondere bei einem Einsatz von Wirbelschichtreaktoren rein mechanische Schritte des Aufbereitens ausreichen. Daher umfassen vorteilhafte Ausführungsbeispiele des Verfahrens auch nur ein solches mechanisches Aufbereiten. Insbesondere braucht für bestimmte Kalzinierer bzw. Kalziniereinrichtungen keine chemische Aufbereitung des zweiten Teils der Abfälle zu erfolgen. Das rein mechanische Aufbereiten bietet den Vorteil, dass weniger Energie für das Aufbereiten eingesetzt werden muss. Insbesondere muss keine Wärmeenergie für das Trocknen und keine Reinigung von Abfallprodukten des chemischen Aufbereitens bereitgestellt werden.

Optional wird das Trennen und/oder das Aufbereiten unmittelbar in einem Müllbunker für die Müllverbrennungseinrichtung durchgeführt. Insbesondere kann ein Müllbunker einer bestehenden Müllverbrennungsanlage nachgerüstet werden, so dass das Aufbereiten des zweiten Teils des Abfalls durchgeführt werden kann. Dabei kann auf bestehende Kräne oder Förderbänder zurückgegriffen werden.

Alternativ oder zusätzlich wird das Trennen und/oder das Aufbereiten in einem oder mehreren von Müllbunkern der Müllverbrennungsanlage getrennten Bunker durchgeführt. Ein eigener Bunker kann insbesondere so eingerichtet werden, dass das Aufbereiten des zweiten Teils des Abfalls dort durchgeführt werden kann. Zum Transport von dem Bunker zu einer Kalziniereinrichtung und/oder zu der Müllverbrennungseinrichtung können neben Förderbändern und Kränen wieder Fahrzeuge, beispielsweise Lastwagen oder Schienenfahrzeuge, eingesetzt werden.

Dabei können auch Mischformen eingesetzt werden. Insbesondere kann das Trennen in einer Vorauswahl erfolgen und beispielsweise ein vorläufiges Sortieren in den ersten und den zweiten Teil umfassen, bevor der erste Teil beispielsweise mit Lastwagen zu einem Müllbunker für die Müllverbrennungseinrichtung und der zweite Teil zu einem Bunker für das Aufbereiten verbracht werden. Diese Vorauswahl kann insbesondere vorteilhaft sein, wenn die Abfälle in Lastkraftwagen beispielsweise im Rahmen einer lokalen Müllabfuhr gesammelt werden. In solchen Fällen kann gerade bei Hausabfällen ein oberflächliches Einteilen nach einem überwiegenden hochkalorischen Müllanteil für das Trennen bereits ausreichen.

Optional umfasst das Sorptionsmittel gebrannten Kalk, CaO. Branntkalk hat sich als besonders effizientes und recycelfähiges Sorptionsmittel herausgestellt.

Optional wird das Verfeuern basierend auf Sauerstoff durchgeführt. Der aufbereitete zweite Teil der Abfälle wird dann in einem Oxyfuel-Prozess verfeuert.

Optional basiert das Karbonatisieren auf dem kalzinierten Sorptionsmittel basiert. Ein Prozessweg des Sorptionsmittels bildet dann durch wiederholtes Karbonatisieren und Kalzinieren einen Kreislauf. Es hat sich gezeigt, dass bei einem Einsatz von Wirbelschichtreaktoren für das Kalzinieren und das Karbonatisieren insbesondere gebrannter Kalk als Sorptionsmittel vorteilhaft ist, da gebrannter Kalk in gut kontrollierbarer Weise zu Calciumkarbonat karbonatisiert und wieder zu gebranntem Kalk kalziniert werden kann. Gebrannter Kalk kann auch beispielsweise gegenüber Magnesium eine höhere Zahl an Zyklen dieses Kreislaufs durchlaufen, bevor er aufgrund hauptsächlich mechanischer Degradierung ersetzt werden muss.

Optional wird somit das Karbonatisieren und/oder das Kalzinieren jeweils in einem Wirbelschichtreaktor durchgeführt. Die Wirbelschichtreaktoren haben sich beispielsweise gegenüber Dreh- und Rostreaktoren bzw. -kalzinerern als vorteilhaft erwiesen, da sich mit ihnen ein höherer Reaktionsgrad erreichen lässt. In Ausführungsbeispielen, in denen sowohl das Karbonatisieren als auch das Kalzinieren in Wirbelschichtreaktoren erfolgen, können besonders große Mengen von Feststoffen (insbesondere dem karbonatisierten Sorptionsmittel und dem kalzinierten Sorptionsmittel) pro Zeit zwischen den Reaktoren ausgetauscht werden. Zudem können die Wirbelschichtreaktoren mit einer deutlich homogeneren Temperatur (d.h. mit weniger Temperaturunterschieden entlang eines solchen Sorptionsmittelkreislaufs) betrieben werden, als dies bei anderen Reaktoren der Fall ist.

Das Kalzinieren basiert auf einer Zufuhr von Wärme, die ganz aus dem zweiten Teil des Abfalls gewonnen werden kann. Rein mechanisch, nicht chemisch aufbereitete Hausabfälle können ein ähnliches Potential zur Erzeugung von Wärme wie Braunkohle aufweisen. Es hat sich herausgestellt, dass das Potential der Hausabfälle ausreicht, um das Kalzinieren durchzuführen.

Optional wird das Kalzinieren jedoch zusätzlich basierend auf Wärme aus zumindest einem der folgenden Prozesse bzw. Systeme durchgeführt: Aus dem Verbrennen, aus dem Karbonatisieren, aus dem kalzinierten Sorptionsmittel, und/oder aus dem abgeschiedenen Kohlendioxidgas. Beispielsweise kann Rauchgas die Müllverbrennungseinrichtung mit einer Temperatur von gut 170 °C verlassen. Entsprechend kann Wärmeenergie aus dem Rauchgas gewonnen und dem Sorptionsmittel zugeführt werden, um so das Kalzinieren zu unterstützen. Dazu können Wärmetauscher wie z.B. Heat Pipes eingesetzt werden, die ausgebildet sind, um Wärmeenergie von dem Rauchgas in den Kalzinierer bzw. die Kalziniereinrichtung zu leiten. Alternativ kann eine externe Brennkammer eingerichtet werden, um Wärme zu erzeugen und basierend darauf das Kalzinieren zu unterstützen. Eine solche Verwendung von zusätzlicher Wärme kann vorteilhaft sein, um eine benötigte Menge des zweiten Teils der Abfälle zu reduzieren. Dies kann vorteilhafterweise insbesondere vorübergehend eingesetzt werden, wenn eine Müllzusammensetzung bzw. ein Anteil von Klassen in den Abfällen zeitlich schwankt. So kann es beispielsweise bei dem Bereitstellen der Abfälle dazu kommen, dass für einige Zeit nur wenige Abfälle mit hohem Brennwert bereitgestellt werden können. In solchen Fällen kann das Kalzinieren vorübergehend durch die Zufuhr von Wärme wie gerade beschrieben aufrechterhalten bzw. das Verfeuern unterstützt werden.

Allerdings kann es auch vorteilhaft sein, diese Wärme aus den genannten Quellen gerade nicht für das Kalzinieren einzusetzen. Ein Vorteil des vorgestellten Verfahrens besteht darin, dass dies allein durch den zweiten Teil des Abfalls erreicht werden kann.

Ausführungsbeispiele beziehen sich auch auf eine Müllverbrennungsanlage mit einer integrierten Kohlendioxidabscheidung. Die Müllverbrennungsanlage umfasst eine Müllverbrennungseinrichtung, die ausgebildet ist, um einen ersten Teil von Abfällen zu verbrennen und dabei erzeugtes Rauchgas, das Kohlendioxid aufweist, abzuscheiden. Die Müllverbrennungsanlage umfasst weiter eine Karbonatisiereinrichtung, die ausgebildet ist, um basierend auf dem Rauchgas ein Sorptionsmittel zu karbonatisieren, und eine Kalziniereinrichtung, die ausgebildet ist, um einen zweiten Teil von Abfällen zu verfeuern, und darauf basierend das karbonatisierten Sorptionsmittel zu kalzinieren und Kohlendioxidgas abzuscheiden. Die Karbonatisiereinrichtung und die Kalziniereinrichtungen umfassen vorteilhafterweise Wirbelschichtreaktoren.

In einer solchen Müllverbrennungsanlage kann das vorangehend beschriebene Verfahren durchgeführt werden. Insbesondere kann das Trennen der Abfälle in einem Müllverbrennungsbunker für die Müllverbrennungseinrichtung oder in einem separaten Bunker erfolgen. Der Müllverbrennungsbunker bzw. der Bunker können dabei unmittelbar dazu ausgebildet sein, um das Aufbereiten wie oben beschrieben durchzuführen. Insbesondere können sie Schredder, Sortieranlagen und Pressen aufweisen sowie Förderbänder und/oder Kräne aufweisen, um die Abfälle entsprechend zu bewegen. Die Abfälle können in der Müllverbrennungsanlage auch mit Fahrzeugen, insbesondere Lastwagen oder Schienenfahrzeugen, befördert werden.

Ausführungsbeispiele beziehen sich auch auf ein Verfahren zum Nachrüsten einer Müllverbrennungsanlage, das zumindest zwei Müllverbrennungseinrichtungen umfasst. Das Verfahren umfasst ein Ersetzen einer der zwei Müllverbrennungseinrichtungen durch eine Kalziniereinrichtung, die ausgebildet ist, um einen Teil von Abfällen zu verfeuern, und darauf basierend ein karbonatisiertes Sorptionsmittel zu kalzinieren und Kohlendioxidgas abzuscheiden. Die Kalziniereinrichtung umfasst vorteilhafterweise einen Wirbelschichtreaktor.

Durch dieses Verfahren zum Nachrüsten einer Müllverbrennungsanlage kann eine Müllverbrennungsanlage mit integrierter Kohlendioxidabscheidung wie vorangehend beschrieben bereitgestellt werden.

Wichtige Aspekte der vorgestellten Verfahren und der vorgestellten Müllverbrennungsanlage lassen sich auch wie folgt darstellen.

Durch die Verfahren und die Müllverbrennungsanlage wird ein CO₂-Abschei-dungsprozess in Abläufe in Müllverbrennungsanlagen integriert. Insbesondere bieten sie eine Integration des Karbonatkreislaufverfahrens (Carbonate-Looping, CaL) für Müllverbrennungsanlagen. Ein Aspekt ist dabei, den oder die für das Karbonatkreislaufverfahren verwendeten Kalzinierer als zusätzliche Verbrennungswege bzw. Verbrennungsanlagen für Abfälle einzusetzen. Dies kann eine Durchsatzmenge von Abfall in der Müllverbrennungsanlage erhöhen und/oder eine alte Müllverbrennungseinrichtung oder einzelne Müllverbrennungslinie ersetzen. Zudem lassen sich so zusätzlicher Brennstoff (wie etwa Kohle) oder weitere Wärmequellen (wie etwa Fernwärme) zur Bereitstellung der Wärme für das Kalzinieren zumindest teilweise und vorteilhafterweise ganz vermeiden. Insbesondere kann dies erreicht werden, indem als Kalzinierer ein Wirbelschichtreaktor eingesetzt wird, der mit Siedlungs- oder Haushaltsabfall und Sauerstoff in einer Oxyfuel-Verfeuerung betrieben wird. Diese Verfeuerung von Abfällen wird durch ein geeignetes Aufbereiten der Abfälle ermöglicht. Das Verfahren kann allerdings auch bei anderen CO₂-Abscheideverfahren als dem Karbonatkreislaufverfahren eingesetzt werden; insbesondere muss es sich bei dem Sorptionsmittel des Kalzinierers nicht um Branntkalk handeln, und es muss nicht notwendigerweise ein Kreislauf des Sorptionsmittels vorliegen. Das Karbonatkreislaufverfahren ist allerdings besonders vorteilhaft.

Im Stand der Technik ist das Karbonatkreislaufverfahren zur Abscheidung von CO₂ in der Müllverbrennung bzw. in der Müllheizkraft bei Verwendung von Ersatzbrennstoff, EBS (insbesondere als solid recovered fuel), als sogenannte Tail-End-Strategie eingesetzt worden. Insbesondere ist der Brennstoff nicht unmittelbar aus dem Abfall, der in der Müllverbrennungsanlage verbrannt werden soll, abgezweigt worden. In solchen Verfahren entstanden daher höhere Kosten für die CO₂-Abscheidung. Darüber hinaus ist der Platzbedarf der Tail-End CaL-Abscheidungsanlagen häufig zu groß für die Anwendung in MHKWs, die oft in besiedelten Regionen mit begrenzter Verfügbarkeit von Flächen für den Bau liegen.

Ein weiterer Aspekt besteht in der Möglichkeit, bestehende Anlagen nachzurüsten. Dabei können eine oder mehrere Verbrennungslinien bzw. Müllverbrennungseinrichtungen durch einen oder mehrere Kalzinierer bzw. Kalziniereinrichtungen, die zur Abscheidung von Kohlendioxid in einem Karbonatkreislaufverfahren ausgebildet sind, ersetzt werden. Falls keine bestehende Verbrennungslinie ersetzt wird, kann die Müllverbrennungsanlage durch die Kohlendioxidabscheideanlage mit dem Kalziniereinrichtung ihre Müllverbrennungskapazität erhöhen.

In neuen Anlagen kann eine Kombination von einem oder mehreren Kalziniereinrichtungen und einer oder mehreren Verbrennungslinien errichtet werden. Die Kalziniereinrichtungen können ausgebildet sein, um das Verfeuern in einem Oxyfuel-Prozess durchzuführen. Die Art der Müllverbrennungseinrichtung ist dabei nicht von Bedeutung; es kann sich beispielsweise um eine Anlage für Rostfeuerung bzw. Vorschubrostfeuerung, Drehrohrofen oder Wirbelschichtverbrennungsanlagen handeln.

Einige Vorteile der vorgestellten Verfahren und der vorgestellten Müllverbrennungsanlage können wie folgt beschrieben werden.

Die Verfahren und die Müllverbrennungsanlage ermöglichen es, den Kalzinierer des CaL-Prozesses als zusätzliche Verbrennungslinien zu nutzen, so dass keine zusätzlichen Einsatzstoffe oder Wärmequellen zur Gewinnung der Wärme für die Kalzinierung benötigt werden. Durch diesen Einsatz des Kalzinierers kann somit die Kapazität der Müllverbrennungsanlage oder einer ihrer Müllverbrennungseinrichtungen zur Verbrennung von Abfällen erhöht werden.

Durch den gemeinsamen Einsatzzweck der Kalziniereinrichtungen als Verbrennungsanlage und als Kalzinierer können Investitionskosten gesenkt werden. Durch die Verwendung von Abfällen als Brennstoff für den Kalzinierer kann eine Senkung der Betriebskosten erreicht werden. Durch die integrierte CO2-Abscheidung kann ein ökologischer Fußabdruck der Müllverbrennungsanlage oder des Müllheizkraftwerks reduziert werden. Insbesondere kann sich ein Flächenbedarf der Müllverbrennungsanlage verringern lassen. Das Karbonatkreislaufverfahren ermöglicht, u.a. durch die Wiederverwendung des Sorptionsmittels, niedrigere Gesamtkosten bei der Abscheidung von CO₂.

### KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig.1: zeigt Schritte eines Verfahrens gemäß der vorliegenden Erfindung.
- Fig. 2: zeigt ein Schema für ein Ausführungsbeispiel des Verfahrens in einer Müllverbrennungsanlage.
- Fig. 3: illustriert Details für drei mögliche Ausführungen des Aufbereitens.

### DETAILLIERTE BESCHREIBUNG

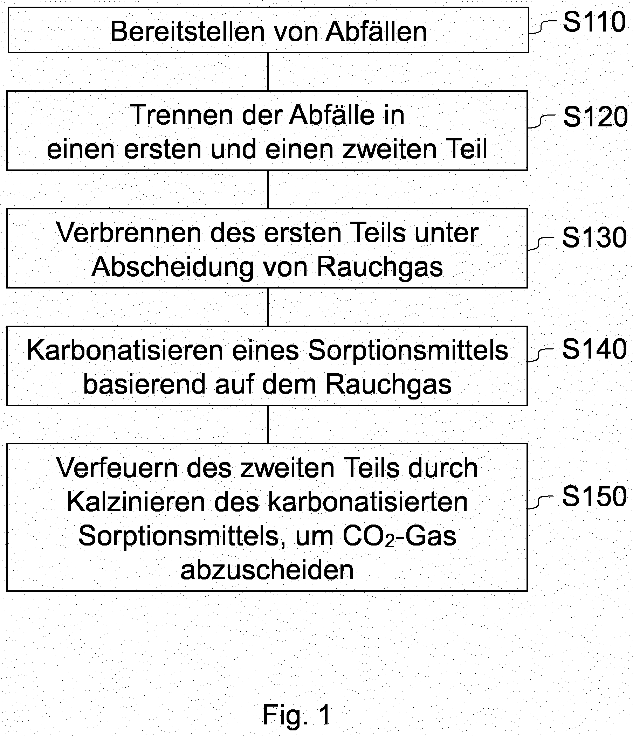

Fig. **1** zeigt Schritte eines Verfahrens zur Kohlendioxidabscheidung für eine Müllverbrennungsanlage. Das Verfahren umfasst ein Bereitstellen S110 von Abfällen. Dies kann beispielsweise durch ein Sammeln von Abfällen in einem oder mehreren Bunkern der Müllverbrennungsanlage erfolgen. Das Verfahren umfasst dann ein Trennen S120 der Abfälle in einen ersten Teil und einen zweiten Teil. Weiter umfasst das Verfahren ein Verbrennen S130 des ersten Teils der Abfälle in einer Müllverbrennungseinrichtung der Müllverbrennungsanlage unter Abscheidung eines dabei erzeugten Rauchgases, das Kohlendioxid aufweist. Das Verbrennen S130 kann in einer oder mehreren Müllverbrennungslinien der Müllverbrennungseinrichtung erfolgen. Die Müllverbrennungslinien können jeweils zum Beispiel einen Drehofen oder einen Vorschubrost-Ofen umfassen. Das Verfahren umfasst dann ein Karbonatisieren S140 eines Sorptionsmittels basierend auf dem Rauchgas. Dies kann in einem Wirbelschichtreaktor erfolgen. Das Verfahren umfasst weiter ein Verfeuern S150 des zweiten Teils der Abfälle, und darauf basierend ein Kalzinieren des karbonatisierten Sorptionsmittels, um Kohlendioxidgas abzuscheiden. Das Karbonatisieren kann vorteilhafterweise in einem Wirbelschichtreaktor erfolgen. Das Verfeuern S150 und das Kalzinieren können in einem Kalzinierer bzw. in einer Kalziniereinrichtung und insbesondere ebenfalls in einem Wirbelschichtreaktor stattfinden, wobei der zweite Teil der Abfälle den festen Brennstoff zur Wärmegewinnung für das Kalzinieren bildet. In Ausführungsbeispielen umfasst das Verfahren ein rein mechanisches Aufbereiten des zweiten Teils der Abfälle, der anschließend als Brennstoff für einen Wirbelschichtreaktor eingesetzt und dazu mit Sauerstoff in einem Oxyfuel-Prozess verbrannt wird.

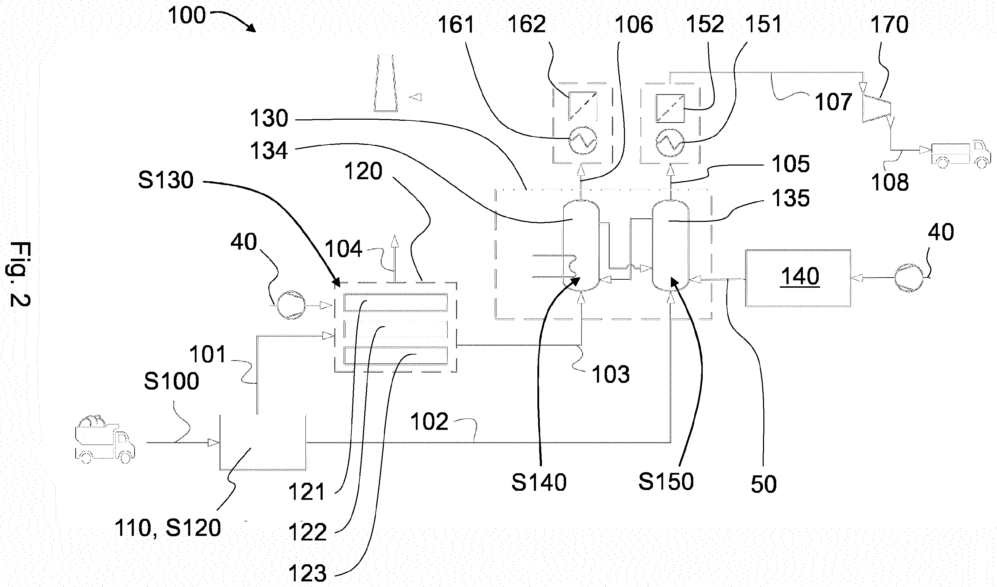

**Fig. 2** zeigt ein Schema für ein Ausführungsbeispiel des Verfahrens in einer Müllverbrennungsanlage 100 der vorgestellten Art, bzw. in einer Müllverbrennungseinrichtung 120. Die Müllverbrennungsanlage 100 umfasst hier eine CO₂-Abscheideeinrichtung 130. Die Müllverbrennungseinrichtung 120 weist mehrere Müllverbrennungslinien 121, 122, 123 auf, die jeweils beispielsweise einen Drehofen oder einen Vorschubrost-Ofen umfassen. Das Bereitstellen S110 der Abfälle umfasst ein Verbringen von Siedlungsabfällen, vorzugsweise Haushaltsabfällen, zu der Müllverbrennungsanlage 100, und dort in einen Bunker 110. In dem Bunker 110 erfolgt das Trennen 120 in den ersten Teil 101 und den zweiten Teil 102 der Abfälle, sowie das Aufbereiten insbesondere des zweiten Teils 102. Das Aufbereiten kann allerdings zumindest teilweise auch den ersten Teil 101 der Abfälle betreffen. Der Bunker 110 kann ein für die im Müllverbrennungsprozess zu verbrennenden Abfälle bestimmter Müllbunker (in situ) oder ein externer bzw. von den Müllverbrennungsbunkern für die Müllverbrennungseinrichtung 120 getrennter Bunker sein. Dieser Bunker kann sich auf einem Gelände der Müllverbrennungsanlage 100 befinden (die Müllverbrennungsanlage 100 kann also den Bunker umfassen). In anderen Ausführungsbeispielen kann es vorteilhaft sein, den Bunker 110 abseits der Müllverbrennungsanlage 100 anzuordnen. Letzteres kann insbesondere der Fall sein, wenn das Trennen S120 durch eine grobe Vorauswahl erfolgen kann.

Die Müllverbrennungsanlage 100 kann ein Müllheizkraftwerk sein. Das Müllheizkraftwerk kann insbesondere ausgebildet sein, basierend auf Wärme 104 Fernwärme bereitzustellen oder elektrischen Strom zu erzeugen.

Das Aufbereiten umfasst vorteilhafterweise ausschließlich oder vorwiegend mechanische Schritte, insbesondere Schreddern, Brechen, Trennen und Mischen. Dabei kann eine Reihenfolge oder eine Wiederholung dieser Schritte von der Beschaffenheit der Abfälle abhängig sein oder abhängig gemacht werden. In manchen Ausführungsbeispielen können auch weitere Schritte dazukommen.

Nach dem Aufbereiten wird der zweite Teil 102 der Abfälle der Kalziniereinrichtung 135 als Brennstoff zum Verfeuern S150 zugeführt. Die Kalziniereinrichtung 135 kann ein Wirbelschichtreaktor sein bzw. einen solchen umfassen. Das Verfeuern S150 kann mit Hilfe von (reinem) Sauerstoff 50 in einem Oxyfuel-Prozess erfolgen. Der dazu eingesetzte Sauerstoff 50 kann in einer Lufttrennungseinrichtung 140 durch ein Abtrennen aus Umgebungsluft 40 gewonnen werden. Der erste Teil 101 der Abfälle wird in den Verbrennungslinien 121, 122, 123 der Müllverbrennungseinrichtung 120 verbrannt.

In weiteren, hier nicht dargestellten Ausführungsbeispielen betrifft das Aufbereiten nur den zweiten Teil 102 der Abfälle; der erste Teil 101 wird unmittelbar dem Verbrennen S130 zugeführt. In weiteren, hier nicht dargestellten Ausführungsbeispielen kann das Trennen S120 auch erst nach dem Aufbereiten der gesamten Abfälle erfolgen.

Das Verbrennen S130 erfolgt hier durch eine Zufuhr von Luft 40. Dabei entsteht die Wärme 104, die z.B. über ein Verdampfen von Wasser zur Stromgewinnung oder als Fernwärme genutzt werden kann. Zudem entstehen Rauchgase 103, die Kohlendioxid enthalten. Die Rauchgase 103 werden einer Karbonatisiereinrichtung 134 zugeführt. Die Karbonatisiereinrichtung 134 umfasst vorteilhafterweise einen Wirbelschichtreaktor. Vor dem Eintritt in die Karbonatisiereinrichtung 134 können die Rauchgase 103 einem Kühlen, einem Filtern, einer Gasreinigung oder einem anderen Reinigungsprozess unterworfen werden. In der Karbonatisiereinrichtung 134 wird das Kohlendioxid in dem Rauchgas 103 durch Karbonatisieren S140 eines Sorptionsmittels abgeschieden. Das Sorptionsmittel ist vorteilhafterweise Branntkalk, CaO.

Das karbonatisierte Sorptionsmittel wird in eine Kalziniereinrichtung 135 überführt und unterläuft dort ein Kalzinieren. Die Kalziniereinrichtung 135 umfasst in vorteilhaften Ausführungsbeispielen ebenfalls einen Wirbelschichtreaktor. Dabei wird ein CO₂-Gas-Strom 105 von hoher Reinheit bzw. Konzentration erzeugt. Dieser Strom 105 wird durch einen wärmerückgewinnenden Wärmetauscher 151 gekühlt und in einer Gasreinigungsanlage 152 gereinigt. Das gereinigte CO₂-Gas 107 wird in einer Verdichtungseinrichtung 170 komprimiert. Das komprimierte CO₂-Gas 108 wird einer weiteren Verwendung zugeführt oder .B. in geologischen Senken eingelagert.

Nach der Karbonatisiereinrichtung 134 wird das nun kohlendioxidarme Rauchgas 106 durch einen weiteren Wärmetauscher 161 einer Wärmerückgewinnung zugeführt und in einer weiteren Reinigungsanlage 162 gereinigt. Die dabei dem Rauchgas 106 entnommene Wärme kann insbesondere zu einer Dampferzeugung und basierend darauf zu einer Gewinnung elektrischer Energie oder auch z.B. als Fernwärme eingesetzt werden. Die hier gewonnene Wärmeenergie kann auch unmittelbar zur Heizung von Feststoffen, und auch zu einer zusätzlichen Heizung des Sorptionsmittels für die Karbonatisiereinrichtung 134 und insbesondere für die Kalziniereinrichtung 135 eingesetzt werden.

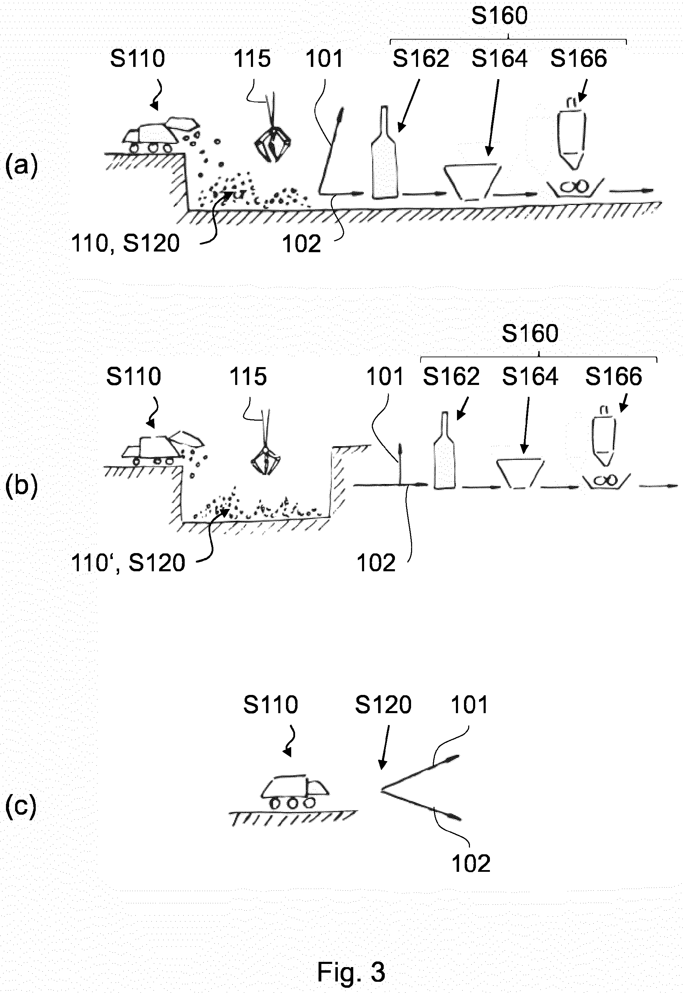

Fig. 3 illustriert Details für drei mögliche Ausführungen des Aufbereitens.

Ein Teil (a) der Figur zeigt ein Aufbereiten in-situ. Hierbei wird der gesamte Abfall in einem einzigen Bunker 110 bereitgestellt. Der Bunker 110 kann ein für das folgende Aufbereiten S160 insbesondere des zweiten Teils 102 der Abfälle ausgebildeter Müllbunker für die Müllverbrennungsanlage 120 selbst sein. Der Müllbunker 110 kann dabei ein durch Anpassen der Anlagen zur mechanischen Aufbereitung nachgerüsteter herkömmlicher Müllbunker sein. In weiteren Ausführungsbeispielen kann der Bunker 110 auch in einer bestehenden Müllverbrennungsanlage 100 neu errichtet worden sein. Der Bunker 110 ist ausgebildet, um die Abfälle (insbesondere Siedlungsabfälle) zu empfangen und in den ersten Teil 101 für das Verbrennen S130 und den zweiten Teil 102 für das Verfeuern S150 zu trennen. Weiter ist der Bunker 110 ausgebildet, um den zweiten Teil 102 mechanisch aufzubereiten, so dass der zweite Teil 102 in der Kalziniereinrichtung 135, insbesondere in einem Wirbelschichtreaktor, verfeuert werden kann.

Das Trennen S120 kann basierend auf einem oder mehreren Kränen 115 und/oder basierend auf einem oder mehreren Förderbändern durchgeführt werden. Nach dem Trennen S120 durchläuft der zweite Teil 102 der Abfälle ein Schreddern S162. Danach durchläuft der zweite Teil 102 ein Ausscheiden S164 metallischer Anteile. Zu diesem Zweck kann eine magnetische Ausscheideeinrichtung in dem Bunker 110 eingesetzt werden. Alternativ oder zusätzlich kann eine Sortier- bzw. Materialklassifiziereinrichtung in dem Bunker 110 ausgebildet sein, die ausgebildet ist, um Abfälle in dem zweiten Teil 102 zu klassifizieren und zu sortieren. Es kann auch ein zweites Schreddern oder ein Brechen S164 bzw. Pressen des zweiten Teils 102 erfolgen. Es können weitere Schritte zur Aufbereitung des zweiten Teils 102 und insbesondere Wiederholungen der genannten Schritte durchgeführt werden. In Abhängigkeit von einer Beschaffenheit der Abfälle kann das Aufbereiten S160 unmittelbar angepasst werden. Insbesondere können dabei auch einzelne Schritte der hier beschriebenen Schritte ausgelassen werden.

Ein Transport des ersten Teils 101 und/oder des zweiten Teils 102 der Abfälle zur Verbrennung bzw. Verfeuerung kann wieder durch Kräne und/oder Förderbänder erfolgen. Insbesondere für längere Wege können auch Fahrzeuge, etwa Lastwagen oder Schienenfahrzeuge, eingesetzt werden.

Ein Teil (b) der Figur zeigt ein Aufbereiten S160 in einer externen Aufbereitungsanlage. Hierbei wird der gesamte Abfall in zumindest einem von den Müllbunkern für die Müllverbrennungseinrichtung 120 verschiedenen Bunker 110' bereitgestellt. Der zumindest eine Bunker 110' kann jedoch noch Teil der Müllverbrennungsanlage 100 sein. Der zumindest eine Bunker 110' ist ausgebildet, um die Abfälle (insbesondere Siedlungsabfälle) zu empfangen und in den ersten Teil 101 für das Verbrennen S130 und den zweiten Teil 102 für das Verfeuern S150 zu trennen.

Unmittelbar nach dem Trennen S120 kann der erste Teil 101 der Abfälle aus dem zumindest einen Bunker 110' in Müllbunker für die Müllverbrennungsablage 120 transportiert werden. Dazu können je nach Distanz Kräne, Förderbänder und/oder Fahrzeuge, insbesondere Lastwagen oder Schienenfahrzeuge, eingesetzt werden. In der Müllverbrennungseinrichtung 120 wird der erste Teil 101 der Abfälle in herkömmlicher Weise verbrannt.

Der zweite Teil 102 der Abfälle durchläuft das Aufbereiten S160. Dies kann in dem zumindest einen Bunker 110' oder in einer von dem zumindest einen Bunker 110' getrennten besonderen Aufbereitungseinrichtung durchgeführt werden. Ein entsprechender Transport kann je nach Distanz durch Kräne, Förderbänder oder pneumatische Förderanlagen und/oder Fahrzeuge, insbesondere Lastwagen oder Schienenfahrzeuge, erfolgen. Das Aufbereiten S160 kann wie zuvor beschrieben ein Schreddern S162, ein Ausscheiden S164 metallischer Anteile, ein Klassifizieren und/oder ein Brechen S166 bzw. Pressen umfassen.

Ein Teil (c) der Figur zeigt ein Trennen S120 in Form eines Vorauswählens der Abfälle noch vor einer Einlieferung in Bunker 110' oder Müllbunker 110 der Müllverbrennungsanlage 100. Dies kann insbesondere bei Haushaltsabfällen eingesetzt werden, die in kleineren Teilmengen (z.B. lastwagenweise) angeliefert werden. Dabei kann bereits für jede einzelne Teilmenge eine Vorauswahl dahingehend erfolgen, ob die Teilmenge insgesamt als erster Teil 101 der Abfälle dem Verbrennen S130 oder als zweiter Teil 102 der Abfälle dem Verfeuern S150 zugeführt werden soll. Diese Vorauswahl kann durch ein Klassifizieren nach Größe, Zusammensetzung, Feuchtigkeitsgehalt, einem geschätzten Brennwert oder ähnlichen Kriterien der Teilmenge erfolgen. Nach dem Vorauswählen S120 können der erste Teil 101 und der zweite Teil 102 der Abfälle separat aufbereitet werden. Das Aufbereiten kann wie zuvor beschrieben ein Schreddern, ein Ausscheiden metallischer Anteile, ein Klassifizieren und/oder ein Brechen bzw. Pressen umfassen.

Die vorangehend beschriebenen Teile (a), (b) und (c) der Figur können jeweils auch ein Aufbereiten für den ersten Teil 101 umfassen. In Ausführungsbeispielen, in denen die Müllverbrennung in einem oder mehreren Drehöfen oder durch Rostfeuerung erfolgt, verlangt der erste Teil 101 der Abfälle allerdings deutlich weniger Aufbereitung als der zweite Teil 102 der Abfälle. Falls auch das Verbrennen S130 in einem Wirbelschichtreaktor erfolgt, kann es vorteilhaft sein, die Abfälle zuerst gemeinsam dem Aufbereiten S160 zu unterziehen und erst danach das Trennen S120 durchzuführen. Das Trennen S120 kann dann nach rein quantitativen Kriterien erfolgen.

In den vorangehend beschriebenen Teilen (a), (b) und (c) der Figur kann es allerdings auch sein, dass nach dem Aufbereiten S160 des zweiten Teils 102 der Abfälle ein Anteil anfällt, der nicht für ein Verfeuern S150 in der Kalziniereinrichtung 135 (bzw. insbesondere zur Verwendung in einem Wirbelschichtreaktor) geeignet ist. Dieser Anteil kann nachträglich dem ersten Teil 101 der Abfälle zugeschlagen werden, das heißt, er kann in der Müllverbrennungseinrichtung 120 verbrannt werden. In manchen Ausführungsbeispielen kann der Anteil aber auch in einer Mülldeponie entsorgt werden.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 40: Luft
- 50: Sauerstoff
- 100: Müllverbrennungsanlage
- 101: erster Teil der Abfälle
- 102: zweiter Teil der Abfälle
- 103: Rauchgas
- 104: Wärme
- 105: CO₂-Gas-Strom
- 106: kohlendioxidarmes Rauchgas
- 107: gereinigtes CO₂-Gas
- 108: komprimiertes CO₂-Gas
- 110: Bunker
- 120: Müllverbrennungseinrichtung
- 121, 122, 123: Verbrennungslinien
- 130: CO₂-Abscheideanlage
- 134: Karbonatisiereinrichtung
- 135: Kalziniereinrichtung
- 140: Lufttrennungseinrichtung
- 151: Wärmetauscher
- 152: Gasreinigungsanlage
- 161: weiterer Wärmetauscher
- 162: weitere Reinigungsanlage
- 170: Verdichtungseinrichtung
- S110: Bereitstellen
- S120: Trennen
- S130: Verbrennen
- S140: Karbonatisieren
- S150: Verfeuern
- S160: Aufbereiten
- S162, S164, S166: Teilschritte des Aufbereitens

## Patentansprüche

1. Ein Verfahren zur Kohlendioxidabscheidung für eine Müllverbrennungsanlage (100), umfassend:
Bereitstellen (S110) von Abfällen;
Trennen (S120) der Abfälle in einen ersten Teil (101) und einen zweiten Teil (102);
Verbrennen (130) des ersten Teils (101) in einer Müllverbrennungseinrichtung (120) der Müllverbrennungsanlage (100) und Abscheiden eines dabei erzeugten Rauchgases (103), das Kohlendioxid aufweist;
Karbonatisieren (S140) eines Sorptionsmittels basierend auf dem Rauchgas (103); und
Verfeuern (S150) des zweiten Teils (102) und darauf basierend Kalzinieren des karbonatisierten Sorptionsmittels, um Kohlendioxidgas (105) abzuscheiden.

2. Das Verfahren nach Anspruch 1, wobei die Abfälle Haushaltsabfälle umfassen.

3. Das Verfahren nach einem der vorhergehenden Ansprüche, das weiter ein Aufbereiten (S160) des zweiten Teils (102) der Abfälle mit zumindest einem der folgenden Schritte umfasst:
- ein Schreddern (S162),
- ein Ausscheiden (S164) metallischer Anteile basierend auf einer magnetischen und/oder einer induktiven Ausscheideeinrichtung,
- ein Klassifizieren von Abfällen,
- ein Brechen (S166).

4. Das Verfahren nach Anspruch 3, wobei das Trennen (S120) und/oder das Aufbereiten (S160)
- unmittelbar in einem Müllbunker (110) für die Müllverbrennungseinrichtung (120) durchgeführt wird, oder
- in einem von Müllbunkern der Müllverbrennungsanlage (100) getrennten Bunker (110') durchgeführt wird.

5. Das Verfahren nach einem der vorhergehenden Ansprüche, wobei das Sorptionsmittel gebrannten Kalk, CaO, umfasst.

6. Das Verfahren nach einem der vorhergehenden Ansprüche, wobei das Verfeuern (S150) basierend auf Sauerstoff (50) durchgeführt wird.

7. Das Verfahren nach einem der vorhergehenden Ansprüche, wobei das Karbonatisieren (S140) auf dem kalzinierten Sorptionsmittel basiert.

8. Das Verfahren nach einem der vorhergehenden Ansprüche, wobei das Karbonatisieren (S140) und/oder das Kalzinieren in einem Wirbelschichtreaktor durchgeführt werden.

9. Das Verfahren nach einem der vorhergehenden Ansprüche, wobei das Kalzinieren basierend auf Wärme aus zumindest einem der folgenden durchgeführt wird:
- dem Verbrennen (S130),
- dem Karbonatisieren (S140),
- dem kalzinierten Sorptionsmittel,
- dem abgeschiedenen Kohlendioxidgas (105).

10. Eine Müllverbrennungsanlage (100) mit integrierter Kohlendioxidabscheidung, umfassend:
eine Müllverbrennungseinrichtung (120), die ausgebildet ist, um einen ersten Teil (101) von Abfällen zu verbrennen und dabei erzeugtes Rauchgas (103), das Kohlendioxid aufweist, abzuscheiden;
eine Karbonatisiereinrichtung (134), die ausgebildet ist, um basierend auf dem Rauchgas (103) ein Sorptionsmittel zu karbonatisieren; und
eine Kalziniereinrichtung (135), die ausgebildet ist, um einen zweiten Teil (102) von Abfällen zu verfeuern, und darauf basierend das karbonatisierten Sorptionsmittel zu kalzinieren und Kohlendioxidgas (105) abzuscheiden.

11. Ein Verfahren zum Nachrüsten einer Müllverbrennungsanlage (100), die zwei Müllverbrennungseinrichtungen (120) umfasst, umfassend:
Ersetzen einer der zwei Müllverbrennungseinrichtungen (120) durch eine Kalziniereinrichtung (135), die ausgebildet ist, um einen Teil (102) von Abfällen zu verfeuern, darauf basierend ein karbonatisiertes Sorptionsmittel zu kalzinieren und Kohlendioxidgas (105) abzuscheiden.
